Europäisches Patentamt

European Patent Office

Office européen des brevets

(11) Veröffentlichungsnummer: **0 469 378 A1**

# EUROPÄISCHE PATENTANMELDUNG

(21) Anmeldenummer: **91111844.6**

(51) Int. Cl.⁵: **H04N 5/645**

(22) Anmeldetag: **16.07.91**

(30) Priorität: **01.08.90 DE 9011298 U**

(43) Veröffentlichungstag der Anmeldung:
**05.02.92 Patentblatt 92/06**

(84) Benannte Vertragsstaaten:
**AT BE CH DE ES FR GB IT LI NL SE**

(71) Anmelder: **Siemens Nixdorf
Informationssysteme Aktiengesellschaft
Fürstenallee 7
W-4790 Paderborn(DE)**

(72) Erfinder: **Köhler, Friedrich
Klemensstrasse 22
W-8901 Meitingen(DE)**
Erfinder: **Matzek, Günter
Watzmannstrasse 4a
W-8901 Merching(DE)**

(74) Vertreter: **Fuchs, Franz-Josef, Dr.-Ing. et al
Postfach 22 13 17
W-8000 München 22(DE)**

(54) **Vorrichtung zum Spaltausgleich zwischen der Bildfläche einer Bildröhre und der Innenkante einer rahmenförmigen Kunststoffblende.**

(57) An der Innenseite der Kunststoffblende (1) sind winkelförmige Rippen (2) angebracht. Ein Schenkel dieser Rippen (2) steht frei von dieser Innenseite ab. Über einen mit der Kunststoffblende (1) in Verbindung stehenden Bolzen (4) werden Haltelaschen (5) der Bildröhre (6) und ein Zusatzrahmen (3) geschoben. Beim Verpressen des Zusatzrahmens (3) gegen die Kunststoffblende (1) werden die Rippen (2) zur Seite gedrückt und damit der Spalt a zwischen Bildfläche (7) und Kunststoffrahmen (1) geschlossen.

## FIG 1

Die Erfindung betrifft eine Vorrichtung zum Spaltausgleich zwischen der Bildfläche einer Bildröhre und einer Innenkante einer rahmenförmigen Kunststoffblende nach dem Oberbegriff des Anspruchs 1.

Bei der Montage von Bildröhre und Kunststoffblende an ein Tragerelement werden heute Automaten oder Roboter eingesetzt. Wie eine solche Montage vor sich geht, ist beispielsweise in der deutschen Offenlegungsschrift DE 36 04 647 Al beschrieben. Die drei Elemente, Kunststoffblende, Bildröhre und Trägerelement werden in eine Einpreßstation gelegt und danach mit einem bestimmten Druck aneinander gepreßt. Rings um die Bildröhre verteilte Bolzen, die entweder mit dem Trägerelement oder dem Kunststoffrahmen fest verbunden sind, werden zur Fixierung des Preßzustandes verwendet. Zu diesem Zweck sind die Bolzen jeweils durch eine mit der Bildröhre verbundene Haltelasche und durch eine Bohrung im Trägerelement oder im Kunststoffrahmen geführt. Das offene Ende des Bolzens steht über die Bohrung im Trägerrahmen bzw. in der Kunststoffblende hinaus. Sind in den Bolzen Gewindegänge eingebracht, dann kann eine Mutter aufgeschraubt werden. Weist der Bolzen eine sägezahnförmige Riffelung gemäß der deutschen Offenlegungsschrift 36 04 626 Al auf, dann kann zur Fixierung ein Klemmverbindungselement auf den Bolzen geschoben werden. Hat der Bolzen aber eine glatte Oberfläche, dann kann er beispielsweise an geeigneter Stelle so gequetscht werden, daß sich sein Durchmesser vergrößert, oder es kann gemäß dem deutschen Gebrauchsmuster G 89 06 680.4 durch Aufschieben eines Klemmelementes auf den Bolzen die gewünschte Fixierung erreicht werden.

Bei dieser automatischen Montage verursacht unter anderem die Forderung nach ringsum bündigem Anliegen der Innenkante der rahmenförmigen Kunststoffblende an der sphärischen Bildfläche der Bildröhre große Schwierigkeiten. Allein durch einen hohen Anpreßdruck der Teile aneinander ist dieses Problem nicht befriedigend lösbar.

Die der Erfindung zugrundeliegende Aufgabe ist es deshalb, eine Vorrichtung zum Spaltausgleich zwischen der Bildfläche einer Bildröhre und einer Innenkante einer rahmenförmigen Kunststoffblende so auszubilden, daß die unabhängig von den Fertigungstoleranzen des Bildröhrenglaskörpers und ohne zusätzlichen manuellen Aufwand ein ringsum bündiger Blendenabschluß gewährleistet ist.

Diese Aufgabe wird erfindungsgemäß durch die im Anspruch 1 angegebenen Merkmale gelöst.

Die als flächige Winkel ausgebildeten Rippen sind nur mit der Außenkante des ersten Schenkels in ihrer ganzen Länge mit der Innenseite der Kunststoffblende verbunden. Diese Verbindung reicht beispielsweise bis zur Innenkante der rahmenförmigen Kunststoffblende. Unter Umständen kann es zweckdienlich sein, den Winkel nicht bis zu dieser Innenkante reichen zu lassen. Dadurch würde die Innenkante weniger steif werden und sie könnte sich eventuell besser an die Bildfläche anschmiegen. Der freie zweite Schenkel der winkelförmigen Rippe wird durch den Zusatzrahmen von der Bildröhre weggedrückt. Diese Kraft wird durch die winkelförmige Rippe so auf die Kunststoffblende übertragen, daß deren Innenkante zur Bildfläche der Bildröhre hinbewegt wird. Ein vor dem Verpressen der Bauelemente bestehender Luftspalt zwischen der Innenkante der Kunststoffblende und der Bildfläche der Bildröhre wird auch bei relativ großen Fertigungstoleranzen geschlossen. Der für das Wegdrücken des freien Endes der winkelförmigen Rippe von der Bildröhre verantwortliche Zusatzrahmen kann ein zusätzliches Bauelement sein. Es ist aber vorteilhaft, den Trägerrahmen so zu gestalten, daß er die Aufgaben des Zusatzrahmens übernehmen kann.

Durch Abschrägen oder Abrunden der bei der Montage miteinander in Berührung kommenden Kanten sowohl der Rippen als auch des Zusatzrahmens ist gewährleistet, daß diese beiden Bauelemente sicher und ohne sich gegenseitig zu beschädigen, aufeinandergleiten.

Im folgenden wird anhand der Zeichnung die erfindungsgemäße Vorrichtung näher erläutert. Dabei zeigen

FIG 1    die zu verbindenden Bauteile vor dem Verpressen,

FIG 2    die zu verbindenden Bauteile nach dem Verpressen.

Auf einer rahmenförmigen Kunststoffblende 1 ist ein Bolzen 4 befestigt. Dieser Bolzen 4 weist zwei unterschiedliche Außendurchmesser auf. Das Ende mit dem größeren Außendurchmesser ist mit der Innenfläche der Kunststoffblende 1 verbunden. Über das Bolzenende mit dem kleineren Durchmesser ist eine Haltelasche 5 geschoben, die auf dem Absatz des Bolzens 4 aufliegt, der sich durch die Stoßstelle vom kleineren zum größeren Bolzendurchmesser ergibt. Die Haltelasche 5 ist mit einer Bildröhre 6, beispielsweise über ein die Bildröhre 6 umschließendes Band 8 verbunden. Zwischen der Bildfläche 7 der Bildröhre 6 und der Innenkante der Kunststoffblende 1 erkennt man einen Spalt a. Dieser Spalt a ist vorhanden, obwohl sich die Haltelasche 5 der Bildröhre 6 bereits in Sollage bezüglich des Bolzens 4 befindet.

Auf der Innenseite der Kunststoffblende 1, die etwa parallel zur Bildfläche 7 der Bildröhre 6 ist, steht eine winkelförmig ausgebildete Rippe 2. Die Außenkante eines ersten Schenkels der Rippe 2, die auf der Innenfläche der Kunststoffblende steht, ist mit dieser Innenfläche fest verbunden. Diese Verbindung ist beispielsweise dadurch gegeben, daß die Kunststoffblende 1 gemeinsam mit der Rippe 2 in einem Arbeitsgang im Spritzgußverfahren hergestellt ist. Ein zweiter Schenkel der winkelförmigen Rippe 2 steht frei von der zur Bildfläche 7 in etwa parallelen Innenseite der Kunststoffblende 1 ab. Die zur Bildröhre 6 hin gewandte Innenkante dieses zweiten Schenkels steht etwa senkrecht zur Bildfläche 7 der Bildröhre 6. In eben diese Richtung steht auch eine zweite Innenfläche der Kunststoffblende 1. Diese Innenfläche und die entsprechende Außenkante des zweiten Schenkels der Rippe 2 stehen nicht miteinander in Verbindung und haben entsprechend einen gewissen Abstand voneinander. Dies ist deshalb sinnvoll, weil die erfindungsgemäße Wirkung der Beseitigung des Spaltes a durch eine Bewegung in eine Richtung c des senkrecht stehenden zweiten Schenkels der Rippe 2, von der Bildröhre 6 weg, verursacht wird. Wären die senkrechte Innenkante der Kunststoffblende 1 und die senkrechte Außenkante des zweiten Schenkels der Rippe 2 miteinander verbunden, dann wäre die Rippe 2 in ihrer Beweglichkeit stark eingeschränkt.

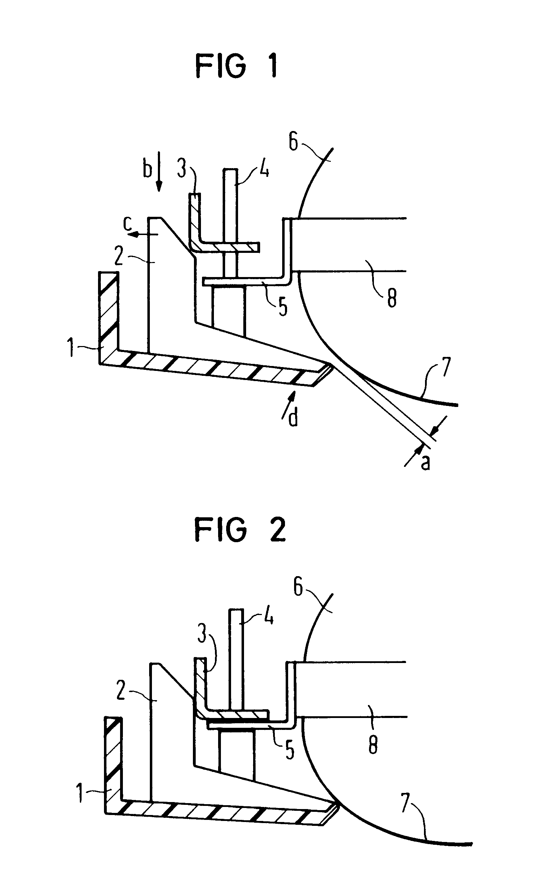

In FIG 1 erkennt man auch einen Zusatzrahmen 3. Dieser Zusatzrahmen 3 liegt lose auf der abgeschrägten, keilförmig verjüngten Auflaufschräge der senkrecht zur Bildfläche 7 stehenden Innenkante des zweiten Schenkels der Rippe 2 auf und ist auf den Bolzen 4 aufgeschoben. Man erkennt deutlich, daß der Abstand zwischen der senkrecht stehenden Innenkante des zweiten Schenkels der Rippe 2 und dem Bolzen 4 geringer ist, als der Abstand zwischen der von der Bildröhre 6 abgewandten Seite des Zusatzrahmens 3 und dem Bolzen 4.

Drückt man den Zusatzrahmen 3 nun in eine Richtung b zur Kunststoffblende 1 hin, so daß der Zusatzrahmen 3 auf der Haltelasche 5 aufliegt, dann muß zwangsläufig die Rippe 2 in Richtung c, also seitlich von der Bildröhre 6 weg, ausweichen. Betrachtet man die winkelförmige Rippe 2 mit ihrem in etwa parallel zur Bildfläche 7 der Bildröhre 6 verlaufenden ersten Schenkel als Wippe mit einem Drehpunkt in Höhe der Bolzenachse, dann erkennt man, daß diese Wippe auf der Seite des senkrecht stehenden zweiten Schenkels nach unten und auf der anderen Seite nach oben gedrückt wird. Diese Bewegung wird durch die feste Verbindung der Rippe 2 mit der Kunststoffblende 1 auf die Kunststoffblende 1 übertragen. Dadurch wird die Innenkante der Kunststoffblende 1 in eine Richtung d zur Bildfläche 7 der Bildröhre 6 hinbewegt und dort angedrückt.

In FIG 2 erkennt man den verpreßten Zustand. Die Innenkante der Kunststoffblende 1 und die Bildfläche 7 stehen direkt miteinander in Kontakt, so daß der Luftspalt a verschwunden ist. Die Fixierung des verpreßten Zustandes ist in der Zeichnung nicht dargestellt.

**Patentansprüche**

1. Vorrichtung zum Spaltausgleich zwischen der Bildfläche einer Bildröhre und einer Innenkante einer rahmenförmigen Kunststoffblende, an deren zur Bildröhre hingewandten Innenseite eine Vielzahl von Rippen angebracht sind, und die über eine Mehrzahl von am äußeren Umfang der Bildröhre befestigten Haltelaschen, durch die jeweils ein mit der Kunststoffblende in Verbindung stehender Bolzen geführt ist, mit der Bildröhre verbindbar ist, **dadurch gekennzeichnet**, daß die jeweils als flächige Winkel ausgebildeten Rippen (2) einen ersten Schenkel aufweisen, dessen Außenkante mit einer zur Bildfläche (7) in etwa parallelen Innenseite der Kunststoffblende (1) verbunden ist, daß die Rippen (2) einen frei von der zur Bildfläche (7) in etwa parallelen Innenseite der Kunststoffblende (1) abstehenden zweiten Schenkel aufweisen, dessen zur Bildröhre (6) gewandte Innenkante in etwa senkrecht zur Bilofläche (7) steht, daß ein Zusatzrahmen (3) von hinten auf die Bolzen (4) aufschiebbar ist und daß die äußeren Maße des Zusatzrahmens (3) um soviel größer sind, als die Maße eines imaginären Rahmens, der sich aus der Verbindung sämtlicher, etwa senkrecht zur Bildfläche (7) stehenden Innenkanten der zweiten Schenkel der winkelförmigen Rippen (2) ergibt, daß ein Eingleiten des Zusatzrahmens in den durch entsprechenden Druck aufgeweiteten imaginären Rahmen möglich ist.

2. Vorrichtung nach Anspruch 1, **dadurch gekennzeichnet**, daß die etwa senkrecht zur Bildfläche (7) stehenden Innenkanten der zweiten Schenkel der winkelförmigen Rippen (2) an ihrem freien Ende keilförmig so verjüngt sind, daß sie als Auflaufschrägen für den Zusatzrahmen dienen.

3. Vorrichtung nach einem der Ansprüche 1 oder 2, **dadurch gekennzeichnet**, daß die Kante des Zusatzrahmens (3), die beim Aufschieben des Zusatzrahmens (3) auf die Bolzen (4) zuerst mit den Innenkanten der zweiten Schenkel der winkelförmigen Rippen (2) in Berührung kommt, angephast bzw. abgerundet ist.

# FIG 1

# FIG 2

# Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 177 748  (TELEFUNKEN)<br>* Spalte 1, Zeile 1 - Spalte 2, Zeile 40 *<br>– – – | 1 | H 04 N 5/645 |
| A | DD-A-267 862  (VEB NUMERIK "KARL MARX")<br>* Seite 1, letzter Absatz - Seite 2, Absatz 1; Zeichnung 2 *<br>– – – | 1 | |
| A | JP-A-2 154 585  (MITSUBISHI)(13-06-1990)<br>* Ganzes Dokument<br>* & PATENT ABSTRACTS OF JAPAN, Band 14, Nr. 411<br>(E-973)[4354], 5. September 1990<br>– – – | 1 | |
| A | US-A-4 651 256  (YAMAGISHI)<br>* * *Anspruch 1; Zeichnung 4 *<br>– – – – – | 1 | |

|  | RECHERCHIERTE SACHGEBIETE (Int. Cl.5) |
|---|---|
| | H 04 N |

Der vorliegende Recherchenbericht wurde für alle Patentansprüche erstellt

| Recherchenort | Abschlußdatum der Recherche | Prüfer |
|---|---|---|
| Den Haag | 24 September 91 | DIPPEL U.H.R. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------
& : Mitglied der gleichen Patentfamilie, übereinstimmendes Dokument